# EUROPÄISCHE PATENTSCHRIFT

(11) **EP 0 414 636 B1**
(45) Veröffentlichungstag und Bekanntmachung des Hinweises auf die Patenterteilung: **15.12.1993**
(21) Anmeldenummer: 90810605.7
(22) Anmeldetag: 13.08.1990
(51) Int. Cl.: B29C 51/14, B32B 7/02, B29C 45/14

(54) **Sterilisierfähiger Verpackungsbehälter aus Kunststoff-Metall-Kunststoff-Verbundmaterial und Verfahren zu dessen Herstellung**
Sterilizable packaging container made from a plastic-metal-plastic laminate and method for its production
Récipient d'emballage stérilisable fabriqué à partir d'une matière laminée plastique-metal-plastique et procédé pour sa fabrication

(30) Priorität: 23.08.1989 CH 3057/89; 21.06.1990 CH 2077/89
(43) Veröffentlichungstag der Anmeldung: 27.02.1991
(73) Patentinhaber: ALUSUISSE-LONZA SERVICES AG, 8034 Zürich (CH)
(72) Erfinder: Muggli, Olivier, CH-8212 Neuhausen am Rheinfall (CH); Ziegler, Andreas, CH-8207 Schaffhausen (CH)

(56) Entgegenhaltungen:
- DE-A- 2 757 370
- US-A- 4 311 742
- PATENT ABSTRACTS OF JAPAN, Band 13, Nr. 229 (M-831)[3577], 26. Mai 1987;& JP-A-1 44 225 (SHOWA ALUM. CORP.) 16-02-1989
- JAPANESE PATENTS GAZETTE, Sektion CH, Woche 8549, 28. Oktober 1985, Klasse A,Nr. 85-307774 (49), Derwent Publications Ltd, London, GB;& JP-A-60 214 955 (TOYO ALUMINIUM K.K.) 28-10-1985
- PATENT ABSTRACTS OF JAPAN, Band 11, Nr. 135 (M-585)[2582], 28. April 1987;& JP-A-61 273 929 (HOSOKAWA YOKO K.K.) 04-12-1986
- JAPANESE PATENTS GAZETTE, Sektion CH, Woche 8112, 24. Januar 1981, Klasse A,Nr. 81-20113D(12), Derwent Publications Ltd, London, GB;& JP-A-56 6981 (YOSHINO KOGYOSHO K.K.) 24-01-1981

## Beschreibung

Die Erfindung betrifft einen sterilisierfähigen Verpackungsbehälter aus Kunststoff-Metall-Kunststoff-Verbundmaterial, wobei der Dickenanteil der Metallschicht unter 20 % liegt, und Verfahren zu dessen Herstellung.

Bisher bekannt gewordene Behälter weisen aber eine nur geringe Steifigkeit auf, so dass sie leicht eingebeult werden können.

Beispielsweise wird in der Japanischen Patentpublikation 61-273929 eine Herstellungsmethode für einen Kunststoffbehälter beschrieben, wobei ein aus drei Schichten bestehendes Material oberflächlich erwärmt und dann tiefgezogen wird.

Aus der gattungsbildenden DE-OS 27 57 370 sind gasdichte Kunststoff-Aluminium-Verbundfolien bekannt, die zu ihrer Herstellung Aluminiumfolien mit einer Reissdehnung nach DIN 53 455 von grösser als 30 % bei einer Dehngeschwindigkeit von grösser als 10'%/sec benötigen und die Aluminiumfolie von 2 Kunststoffschichten umgeben ist. Die Verbundfolie soll sich zur Herstellung von Formteilen nach dem Tiefziehverfahren eignen. Der genannte Wert für die Reissdehnung wird mit einer Messmethode für Kunststoffe gemessen und die angestrebten Werte werden nur mit superplastischen Aluminiumlegierungen erreicht. Solche Legierungen bedürfen spezieller thermomechanischer Behandlung und Legierungsauswahl.

Die Erfinder haben sich daher die Aufgabe gestellt, solche Verpackungsbehälter derart zu verbessern, dass die beulunempfindlich werden bzw. "spring-back"-Eigenschafte aufweisen.

Die Aufgabe wird erfindungsgemäss mit einem Behälter gelöst, der dadurch gekennzeichnet ist, dass das Verbundmaterial aus einer ersten Kunststoffschicht aus biaxial gereckten Materialien mit hoher Dehnung und gleichzeitig hoher innerer Spannung sowie zunehmender Verfestigung beim Verformen und einer zweiten Kunststoffschicht der Dicke von 0,1 bis 0,8 mm mit hoher Dehnung und hohem Lastaufnahmevermögen bei der Umformung besteht, zwischen denen sich eine Metallschicht mit einer Dicke von 0,006 bis 0,1 mm aus Aluminium mit einem Aluminiumgehalt von 98 % oder mehr oder aus einer Aluminiumlegierung befindet, mit der Massgabe, dass Aluminiumfolien aus superplastischen Aluminiumlegierungen mit einer Reissdehnung von grösser als 30 % bei einer Dehngeschwindigkeit von grösser als 10'%/sec ausgenommen sind, wobei die erste Kunststoffschicht als Dehnvermittler für die Metallschicht dient und quasiisotrop ist, und
die zweite Kunststoffschicht beim Umformen durch zunehmende Dehnung versteift ist.

Die Aufgabe wird erfindungsgemäss zweckmässig mit einem Behälter gelöst, welcher dadurch gekennzeichnet ist, dass das Verbundmaterial eine erste Kunststoffschicht aus biaxial gereckten Materialien einer Dicke von 0,008 mm bis 0,05 mm mit hoher Dehnfähigkeit und gleichzeitig hoher Festigkeit, sowie zunehmender Verfestigung beim Verformen und eine zweite Kunststoffschicht der Dicke von 0,1 bis 0,8 mm mit hoher Dehnung und hohem Lastaufnahmevermögen bei der Umformung enthält, und zwischen den Kunststoffschichten sich eine Metallschicht einer Dicke von 0,006 bis 0,1 mm aus Aluminium mit einem Aluminiumgehalt von 98 % oder mehr oder aus einer Aluminiumlegierung befindet, mit der Massgabe, dass Aluminiumfolien aus superplastischen Aluminiumlegierungen mit einer Reissdehnung von grösser als 30 % bei einer Dehngeschwindigkeit von grösser als 10'%/sec ausgenommen sind, wobei die erste Kunststoffschicht als Dehnvermittler für die Metallschicht dient und quasiisotrop ist, und die zweite Kunststoffschicht 10 bis 70 Vol.-%, bezogen auf die zweite Kunststoffschicht, Füllstoffe enthält.

Das Verbundmaterial weist demnach eine erste Kunststoffschicht auf, welche bei einem aus dem Verbundmaterial hergesteellten Behälter nach aussen gerichtet ist, ferner weist das Verbundmaterial eine Metallschicht auf, die zwischen der ersten Kunststoffschicht und der zweiten Kunststoffschicht liegt, und die zweite Kunststoffschicht bei einem aus dem Verbundmaterial hergestellten Behälter nach innen gerichtet ist, d.h. sich auf der Behälterinnenseite befinden soll. Die Schichten können auf an sich bekannte Weise miteinander verbunden sein. Die erste und/oder die zweite Kunststoffschicht können mit dem Metall kaschiert, kalandriert oder extrusionsbeschichtet werden. Zur Verbindung der Kunststoffschichten mit dem Metall oder von Kunststoffschichten unter sich, sind beispielsweise lösungsmittelhaltige oder lösungsmittelfreie Kaschierkieber, wässerige Dispersionskleber oder thermisch aktivierbare Haftschichten geeignet.

Die zweite Kunststoffschicht ist vorzugsweise siegelfähig.

Die Behälter nach vorliegender Erfindung sind sterilisierbar und weisen vorzugsweise wenigstens eine siegelfähige Schicht auf. Die Vorteile der Erfindungsgemässen Behälter liegen in deren Steifigkeit, d.h. sie sind beulunempfindlich bzw. weisen in ihrer Anwendung als Verpackung für aggressive Füllgüter, insbesondere bei Vollkonserven von Nahrungsmitteln, "spring-back"-Eigenschaften auf.

Die Steifigkeitseigenschaften (beulunempfindlich und "spring-back-Charakter") ermöglichen eine Verpackung zu gestalten, deren Aussehen im Vergleich zu den heute bekannten Behältern aus Metall-Kunststoff-Verbunden durch mechanische Einflüsse beim Handling, insbesondere durch unsorgfältiges Handhaben bei Verkaufsorganisationen praktisch nicht beeinträchtigt wird.

Die erfindungsgemässen Verpackungsbehälter weisen eine dünne Metallschicht auf, die als Barriere gegen von aussen wirkende chemische, physikalische und optische Einflüsse auf das Füllgut wirkt.

Diese Metallschicht kann bevorzugt aus einem Aluminium mit einem Aluminiumgehalt von 98,6 % oder aus einer Aluminiumlegierung, z.B. vom Typ 8101 (AA 8014) bestehen, besonders bevorzugt ist Aluminium einer Reinheit von 99,6 %.

Die Metallschichtdicke beträgt zweckmässig weniger als 10 % der Dicke des Verbundmaterials.

Bevorzugt sind Metallschichten einer Dicke von 0,008 bis 0,04 mm oder von 0,02 bis 0,1 mm, wobei in der Praxis ganz besonders bevorzugt Metallschichten einer Dicke von 0,02 bis 0,05 mm sind.

Die erste Kunststoffschicht des Verbundmaterials, die bei einem daraus hergestellten Verpackungsbehälter in der Regel nach aussen gerichtet ist, besteht vorteilhaft aus einer hochzähen, hochdehnbaren Folie eines Thermoplastes. Es werden biaxial gereckte Materialien, wie orientiertes Polyester (z.B. oPET), orientiertes Polypropylen (oPP), orientiertes Polyamid (oPA) , orientiertes Hochdruck- oder Niederdruck-Polyethylen (oPE), orientiertes Polymethylpenten (oPMP), orientiertes Polystyrol (oPS), Polyetherimid (PI), Polyetheretherketon (PEEK), Polycarbonat (PC) oder Copolymere enthaltend genannte Thermoplasten, angewendet.

Diese Folien sollen insbesondere eine hohe Dehnfähigkeit und eine hohe Festigkeit in Maschinen- (MD) und in transversaler Richtung (TD) mit einer zunehmenden Verfestigung aufweisen.

Aus Umformgründen werden biaxial gereckte Folien mit in MD und TD quasiisotropen Eigenschaften bevorzugt. Eine solche Folie dient als Dehnvermittler für die Metallschicht. Diese Schicht nimmt die bei der Metallschicht auftretenden Spannungen während der Umformung auf.

Die nach aussen und/oder die nach innen gerichteten Kunststoffschichten können gegebenenfalls gefärbt sein, sofern die Dehnfähigkeit nicht beeinträchtigt wird. DieKunststoffschichten können auch bedruckt oder konterbedruckt werden.

Die erste, in der Regel nach aussen gerichtete Kunststoffschicht hat die Aufgabe, die Metallschicht mechanisch zu unterstützen und lokale Einschnürungen beim Umformprozess zu verhindern. Die erste Kunststoffschicht weist zweckmässig eine Dicke von 0,01 bis 0,04 mm auf.

Die zweite Kunststoffschicht des Verbundmaterials, die bei einem daraus hergestellten Verpackungsbehälter in der Regel nach innen gerichtet ist, kann aus einer siegelfähigen hochsteifen und hochdehnbaren Thermoplastmatrix bestehen.

Bevorzugt als Thermoplastmatrix sind z.B. Schichten aus Polypropylen (PP), Polyester (z.B. Polyethylentherephtalat (PET)), Polystyrol (PS), Hochdruck- oder Niederdruck-Polyethylen (PE), Polymethylpenten (PMP), Polycarbonat (PC) und Copolymere enthaltend diese Materialien. Weitere Beispiele für die zweite Kunststoffschicht sind Folien aus orientiertem Polypropylen (BOPP) oder aus orientiertem Polyamid (BOPA) oder aus orientiertem Polyethylenterephtalat (BOPETP, BOPETG) oder aus orientiertem Niederdruck-Polyethylen (BOHDPE) oder aus orientiertem Polycarbonat (BOPC) oder aus Polyetherimid (PEI) oder aus Polyetheretherketon (PEEK) oder aus orientiertem Polystyrol (BOPS). Die zweite Kunststoffschicht enthält zweckmässig 10 bis 70 Vol.-% Füllstoffe. Bevorzugt sind 20 bis 50 Vol.-%, bezogen auf die zweite Kunststoffschicht, Füllstoffe.

Bevorzugt werden Copolymere mit Sterilisationseigenschaften.

Beispiele für Füllstoffe sind Faserverstärkungsmaterialien, wie Fasern aus Kohlenstoff, Glasfasern, "Kevlar", Aramid, natürliche Füllstoffe, wie Cellulosen, z.B. α-Cellulose, Fichtenrinde, Nussschalen, Holzmehl, Baumwollflocken, Korkgranulat, Lignin; mineralische Füllstoffe, wie Kieselerde, Tonerdehydrat, Kaolin, Talk, Diatomit, Silikate, Baryt, Titandioxid, Kreide und Erdalkaliverbindungen, wie Calciumcarbonat oder Mischungen aus genannten Materialien bevorzugt sind mineralische Füllstoffe, Talk, Glasfasern und Titandioxid.

Weiter kann die zweite Kunststoffschicht Farbpigmente, lichtbrechende Pigmente, kalzinierte Kreide oder Glaskugeln enthalten.

Ueber die Dicke der zweiten Kunststoffschicht, die zweckmässig 0,1 bis 0,6 mm betragen kann, und den Füllstoffanteil können die Steifigkeitseigenschaften der erfindungsgemässen Behälter, die aus dem Verbundmaterial hergestellt werden, gesteuert werden.

Die zweite Kunststoffschicht weist bevorzugt eine Dicke von 0,2 bis 0,5 mm auf. Bevorzugt ist ein Füllstoffanteil von bis 50 Vol.-%, bezogen auf die zweite Kunststoffschicht.

Die zweite Kunststoffschicht kann besonders bevorzugt mit Kurzfasern aus Glas gefüllt sein. Die Kurzfasern aus Glas können z.B. 0,1 bis 0,8 mm lang und 0,005 mm bis 0,02 mm dick sein. Ein optimaler Füllstoffgehalt in der zweiten Kunststoffschicht ist 30 Vol.-%. Die Dicke der zweiten Schicht enthaltend Kurzfasern aus Glas als Füllstoff, kann insbesondere 0,2 bis 0,5 mm betragen.

Mit einer solchen besonders bevorzugten zweiten Kunststoffschicht kann bei hohen Umformgraden das Elastizitätsmodul erhöht werden.

Entsprechen beispielsweise die genannten Füllstoffe nicht den einschlägigen Bestimmungen über das Gesundheitswesen (Bundesgesundheitsamt, Food and Drug Administration), so kann auf die zweite Kunststoffschicht wenigstens eine weitere physiologisch unbedenkliche Kunststoffschicht, die zweckmässig siegelbar ist, aufgebracht werden.

Die Dicke einer solchen Schicht kann 0,001 bis 0,02 mm betragen, bevorzugte Materialien sind Polyester, Polypropylen, Polyamid oder Polyethylen.

Die zweite, nach innen gerichtete Schicht spielt nicht nur die Rolle des Korrosionsschutzes der Metallschicht und der Optimierung der Reibungsverhältnisse während des Umformprozesses, sondern ist auch für die Steifigkeitseigenschaften des Behälters von Bedeutung.

Selbstverständlich kann auch die oben detailiert dargelegte Werkstoffkombination bezüglich Innen- nach Aussenseite vertauscht werden. Die Anforderungen und die einzelnen Schichten bleiben erhalten. Zusätzlich ist es vorteilhaft den inneren Dehnvermittler mit einer siegelfähigen Schicht durch Oberflächenbehandlung oder duch zusätzliches Aufbringen eines Siegellacks oder durch Kaschieren einer Siegelfolie zu versehen.

Dabei entfallen auf die nach innen gerichtete Schicht besondere Anforderungen bezüglich der Verhinderung der Aufnahme von Aromastoffen oder sonstigen flüchtigen Substanzen des Füllgutes. Auf die Beeinträchtigung der mechanischen Eigenschaften der Stützfolie oder der Grenzfläche Kunststoff/Kleber durch Wasser- oder Alkoholaufnahme muss ebenfalls geachtet werden.

Sowohl die erste und die zweite Kunststoffschicht, als auch das Verbundlaminat sind bevorzugt sterilisierfähig. Dadurch werden diese Materialien während der Umformung bei erhöhter Temperatur thermisch nicht beschädigt.

Die Verarbeitung der beschriebenen Verbundmaterialien zu den erfindungsgemässen sterilisierbaren Verpackungsbehältern kann auf verschiedene Weise geschehen.

Sollen aus den beschriebenen Verbundmaterialien Behälter mit niedrigen Umformungsgraden hergestellt werden, kann die Umformung durch Tiefziehen mittels Tiefziehwerkzeug und Matrize erfolgen.

Unter niedrigen Umformungsgraden werden z.B. ein Verhältnis von Durchmesser zu Tiefe des herzustellenden Behältnisses von 4 oder grösser als 4 zu 1 verstanden.

Die Umformung kann auch ohne Zuführung von Wärme geschehen, da in diesen Fällen die Restspannungen verhältnismässig gering sind. Das gleiche Verfahren kann für Behälter mit grösserem Umformgrad, bei denen keine absolute Masshaltigkeit gefordert ist, angewendet werden. Dabei soll das Verbundmaterial über die erforderliche Behältertiefe H umgeformt werden, das heisst, die Endgeometrie wird erst nach der Relaxation der Restspannungen erreicht.

Die nach innen gerichtete Kunststoffschicht weist vorzugsweise, zum Zweck der besseren Umformung, eine glatte, reibungsarme Oberfläche und eine hohe Grenzformänderung auf. Füllstoffe, wie z.B. oben genannt, reduzieren die Rückformung nach dem Umformvorgang und nach einer Sterilisation.

Das Umformen im Zustand unterhalb der üblichen Thermoformtemperaturen von Kunststoffen, wie PP, PE, PET im Dickenbereich von 0,1 bis 0,6 mm, führt meistens zu Inhomogenitäten im Fliessverhalten des Kunststoffes. Das Material schnürt lokal ein, was zur schnellen Rissbildung in der Al-Schicht führt.

Dies ist insbesondere bei der Herstellung von Behältern mit einem Verhältnis von Durchmesser zu Höhe von kleiner als beispielsweise 4:1 der Fall.

Durch die erfindungsgemässe Beimischung von Füllstoffen im Bereich von 20-70 Vol.-%, bezogen auf die zweite Kunststoffschicht, in die genannten Kunststoffe kann das inhomogene Fliessen des gefüllten Kunststoffes weitestgehend eliminiert werden. Das Umformpotential des Verbundmaterials kann dadurch optimal ausgeschöpft werden.

Der hohe Füllstoffgehalt im Bereich von 20 bis 70 Vol.-% kann auch eine Reduzierung der Rückfederung der dicken inneren Kunststoff-Schicht nach der Umformung bewirken.

Falls die Rückfederung nach der Umformung zu gross ist, kann am Ende der Verformung, noch im belasteten Zustand, der Behälter, durch Wärmeeinbringung, thermisch fixiert werden. Durch die Wärme werden die noch vorhandenen Rückstellkräfte abgebaut, der Behälter bleibt dimensionsstabil.

Die innere Schicht spielt nicht nur die Rolle des Korrosionsschutzes der Metallschicht und der Optimierung der Reibungsverhältnisse während des Umformprozesses, sondern trägt auch zu den Steifigkeitseigenschaften des Behälters bei.

Das Hauptmass der Steifigkeit des fertigen Behälters wird vorteilhaft durch die Dicke und den Füllstoffgehalt der zweiten inneren Kunststoffschicht erzielt.

Bei Behältern mit einem Verhältnis von Behälterdurchmesser zu Behältertiefe von 3 und grösser als 3 zu 1 kann das Verbundmaterial in einem Verfahrenschritt, bei einer Temperatur von z.B. 80° C bis 130° C umgeformt werden, dabei ist zweckmässigerweise auch das Werkzeug (Stempel und/oder Matrize) beheizt.

Bei einem Verhältnis von Behälterdurchmesser (zu Behältertiefe von kleiner als 3 (beispielsweise bis 1) zu 1 kann es vorteilhaft sein, je nach Umformgrad, in mehreren Umformschritten mit Tiefziehwerkzeugen und Niederhaltern, wie sie für z.B. metallische Werkstoffe bekannt sind, zu arbeiten, wobei insbesondere der letzte Umformschritt unter thermischer Einwirkung erfolgen kann. Beim letzten Umformschritt wird in bevorzugter Weise auf keine höhere Umformung als die elastische Rückverformung abgezielt und durch die Wärme werden im wesentlichen nur die Restspannungen relaxiert.

Das beschriebene Verfahren benötigt in der Praxis oft mehrere Umformschritte und zweckmässigerweise auch wenigstens zwei Werkzeuge, wie z.B. ein Umformwerkzeug für die kalte Verformung und ein Umformwerkzeug für die Stabilisierung in warmem Zustande. Eine andere Verfahrensweise kann sich zuerst eines warmen Werkzeuges und anschliessend eines kalten Werkzeuges bedienen.

Eine Vorrichtung zur Ausübung des Verfahrens wird z.B. in der DE-PS 25 39 354 beschrieben.

Ein Beispiel für ein anderes geeignetes Verfahren zur Herstellung eines sterilisierfähigen Verpackungsbehälters ist dadurch gekennzeichnet, dass der Behälter durch eine Kombination von Streck- und Tiefziehen bei erhöhter Temperatur unterhalb der Thermoformtemperaturen der eingesetzten Kunststoffe gefertigt wird.

Damit die Grenzformänderung maximal wird, folgt das ideale Streckziehen dem Tiefziehen. Insbesondere durch eine Kombination der beiden Verfahrensschritte ist es möglich, eine hohe Formstabilität und eine homogene Dickenverteilung des Materials zu erzeugen. Für den Fall einer dünneren Kunststoffschicht als Innenseite des Behälters - mit der Folge einer geringeren Beulunempfindlichkeit bzw. reduziertem "spring-back-Charakter" - ergibt die Verfahrenskombination des Streck- und Tiefziehens die Möglichkeit, das Verbundmaterial faltenfrei umzuformen. Bei einer inneren Kunststoffschicht, beispielsweise mit einer Dicke unter 0.1 mm, kann je nach Füllstoffen, Additiven und zugesetzten Pigmenten vorteilhafterweise sogar auf die erhöhte Temperatur verzichtet werden.

Ein besonders vorteilhaftes Verfahren zur Herstellung von Behältern beliebigen Verhältnisses zwischen Behälterdurchmesser und Behältertiefe und zweckmässig zur Herstellung von Behältern mit einem Verhältnis zwischen Behälterdurchmesser und Behältertiefe von 3 oder kleiner als 3 zu 1 und vorzugsweise von 2 oder kleiner als 2 zu 1, ist Gegenstand vorliegender Erfindung. Die Grenzen der Anwendbarkeit dieses Verfahrens werden in der Regel erst bei einem Verhältnis von Behälterdurchmesser zur Behältertiefe von 1:1 erreicht.

Das Verfahren zur Herstellung des beschriebenen sterilisierbaren Verpackungsbehälters, ist gekennzeichnet durch eine Kombination von Tiefziehen, gegebenenfalls anschliessendem Streckziehen, und thermischer Stabilisierung des Behälters unterhalb der Thermoformtemperatur der eingesetzten zweiten Kunststoffschicht.

Das Verfahren stützt sich auf Verfahrensschritte die für sich bekannt sind, nämlich des Tiefziehens und gegebenfalls des Streckziehens, wobei letzteres sich einer Matrize, eines Stempels und eines Niederhalters bedient. Der Niederhalter dient dazu, das Verbundmaterial am Matrizenrand festgehalten, während der Stempel das Verbundmaterial unter gleichzeitiger Streckung in die Matrize hineinformt.

Das Verfahren kann derart näher beschrieben werden, dass die Verformung des Verbundmaterials in einer zum Tiefziehen geeigneten Vorrichtung ausgeführt wird, wobei der Tiefziehschritt mit einer Niederhaltekraft des Niederhalters derart erfolgt, dass das zum Tiefziehschritt benötigte Material aus dem Bereich der Matrize und des Niederhalters nachgezogen wird. Wenn das Verbundmaterial auf die endgültige Tiefe umgeformt ist, wird das Verbundmaterial erwärmt. Die Erwärmung kann sowohl durch Erwärmung von aussen (temperierte Werkzeuge) oder z.B. durch im Aluminium induzierte Wärme (hochfrequente Induktionserwärmung) erfolgen.

Letzterer Schritt ist für die Stabilisierung der Behältergeometrie durch dem Abbau von Restspannungen entscheidend.

In der Praxis wird das Verfahren beispielsweise derart ausgeführt, dass der Tiefziehschritt bei einer Niederhaltekraft des Niederhalters von 0,8 bis 2 kN, die bei 0% der Behältertiefe (H) beginnt und bei 100 % der Behältertiefe (H), die auch dem Stempelweg entspricht, endet. Die Niederhaltekraft des Niederhalters ist so zu wählen, dass das Material bei zunehmendem H immer in das Werkzeug nachfliessen kann. Je nach Verhältnis von Behälterdurchmesser zu Behältertiefe, insbesondere bei Verhältnissen kleiner als 3 zu 1 ist eine Abstufung der Niederhaltekraft des Niederhalters vorteilhaft. Bei der Behältertiefe (H) von 0 % bis auf 60 % kann die Niederhaltekraft zwischen 0,6 kN und 1,2 kN gewählt werden und bei der Behältertiefe von 60 % bis 100 % die Niederhaltekraft bis 2,0 kN erhöht werden, wobei über den Tiefzug hinaus auch ein Streckzug eintreten kann.

In der Praxis kann bei erreichen von 100 % der Behältertiefe (H) die Niederhaltekraft des Niederhalters auf 30 kN bis 60 kN erhöht werden, damit der Behälterrand geglättet wird. Während oder nach diesem letztgenannten Vorgangerfolgt beispielsweise während 0,3 bis 1 Sekunde eine Hochfrequenz Erwärmung mit einer Leistung von 5 bis 18 kW in einem Frequenzbereich von 20-150 kHz, wobei die Leistung und Frequenz der Induktionserwärmung auf die Grösse und Geometrie des Behälters abgestimmt werden müssen. Diese optimalen Daten lassen sich beispielsweise durch wenige gezielte Versuche ermitteln.

Zur Ausführung der beschriebenen Verfahren werden der Stempel und die Matrize beispielsweise aus Kunststoffen wie z.B. Polytetrafluorethylen oder Polymethylenpentenhergestellt oder die verformungswirksamen Oberflächen sind mit diesen Materialien beschichtet. In den Stempel und/oder die Matrize ist z.B. eine Induktorschleife eingelegt. Durch diesen Induktor wird dann ein Strom induziert, wenn das Verbundmatrial auf die endgültige Tiefe H umgeformt ist. Durch die induzierte Energie wird das Aluminium erwärmt, was zu einer Wärmeübertragung in den Kunststoff führt. Dadurch kann die Wärme zugeführt werden, um die im Kunststoff verbliebenen Restspannungen abzubauen.

Zweckmässigerweise wird dieses Verfahren mit einem Hochfrequenz-Generator, der in einem Leistungsbereich von 5-8 kW arbeitet und einem Hochfrequenz-Bereich von 30-150 kHz hat, ausgeführt. Die Einwirkzeit der induzierten Energie beträgt zweckmässig zwischen 0,3 und 1,0 sec.

Die geringe Dicke der Metallschicht ist an sich nicht in der Lage, für ausreichende Steifigkeit zu sorgen. Sie dient im wesentlichen als Barriereschicht.

Zur kostengünstigen Herstellung des Behälters ist es vorteilhaft, wenn die zweite nach innen gerichtete Kunststoff-Schicht thermisch oder indirekt über die Metallschicht hochfrequenzsiegelfähig gegen einen Kunststoff-Deckel oder gegen eine durch Lackierung oder Kaschierung beschichtete Metallschicht ist.

Bei der Wahl eines Verbundlaminates mit relativ dünneren Kunststoffschichten, das an sich für den vorgesehenen Verwendungszweck noch keine ausreichenden Steifigkeitseigenschaften besitzt, kann die nach dem Umformprozess entstandene Behälterform in einem weiteren Verfahrensschritt durch Umspritzen mit einem Thermoplast wie Polyethylen, Polypropylen, Polyester usw. eine ausreichende Steifigkeit erhalten. Eine Schichtdicke von 0,3 bis 0,6 mm ist besonders vorteilhaft.

Beispielsweise bei der faltenfreien Umformung der beschriebenen Verbundlaminate spielt auch die Wahl der entsprechenden Stempelmaterialien oder Stempelüberzüge eine wichtige Rolle. Durch Stempelmaterialien wie Teflon oder Siliconkautschuken u.a. können lokal unterschiedliche Reibungs- und radiale Stauchverhältnisse erzeugt werden. Bevorzugt weist die nach innen gerichtete Kunststoffschicht eine niedrige Oberflächenreibung auf. Durch geeignete radiale Stauchung kann eine weitgehenst faltenfreie Behälterform erzielt werden. Das Tiefziehen bei Raumtemperatur, mit konventionellen Werkzeugen, ermöglicht eine faltenfreie Umformung, wenn die Behälterwandungen mit Rippen versehen werden, wodurch die Wandungsflächen vergrössert werden, damit die Falten eliminiert werden können.

Zur Gestaltung von glattwandigen Behälter formen werden bevorzugt teleskopische Stempel eingesetzt, die einerseits eine positive Wirkung auf die maximal erreichbare Dehnungs-Grenzformänderung und andererseits auf das faltenfreie Erscheinungsbild haben.

Zur kostengünstigen Herstellung des Behälters ist es vorteilhaft, wenn die innere Kunststoff-Schicht beispielsweise thermisch oder indirekt über die Metallschicht hochfrequent siegelfähig gegen einen Kunststoff-Deckel oder gegen eine durch Lackierung oder Kaschierung bescichtete Metallschicht ist.

Behälter nach vorliegender Erfindung können aufgrund ihrer Barriereeigenschaften beispielsweise als Behälter für Nahrungsmittel oder für Futtermittel Verwendung finden. Die Behälter sind in leerem wie in gefülltem Zustande sterilisierbar.

## Patentansprüche

1. Sterilisierfähiger Verpackungsbehälter aus Kunststoff-Metall-Kunststoff-Verbundmaterial mit einem Dickenanteil an Metall von weniger als 20 % der Gesamtdicke des Verbundmaterials, hergestellt durch Umformen,
dadurch gekennzeichnet, dass
das Verbundmaterial aus einer ersten Kunststoffschicht aus biaxial gereckten Materialien mit hoher Dehnung und gleichzeitig hoher innerer Spannung sowie zunehmender Verfestigung beim Verformen und einer zweiten Kunststoffschicht der Dicke von 0,1 bis 0,8 mm mit hoher Dehnung und hohem Lastaufnahmevermögen bei der Umformung enthält, zwischen denen sich eine Metallschicht mit einer Dicke von 0,006 bis 0,01 mm aus Aluminium mit einem Aluminiumgehalt von 98 % oder mehr oder aus einer Aluminiumlegierung befindet, mit der Massgabe, dass Aluminiumfolien aus superplastischen Aluminiumlegierungen mit einer Reissdehnung von grösser als 30 % bei einer Dehngeschwindigkeit von grösser als 10'%/sec ausgenommen sind, wobei die erste Kunststoffschicht als Dehnvermittler für die Metallschicht dient und quasiisotrop ist, und die zweite Kunststoffschicht beim Umformen durch zunehmende Dehnung versteift ist.

2. Sterilisierfähiger Verpackungsgehälter nach Anspruch 1,
dadurch gekennzeichnet, dass
das Verbundmaterial eine erste Kunststoffschicht aus biaxial gereckten Materialien der Dicke von 0,008 bis 0,05 mm mit hoher Dehnfähigkeit und gleichzeitig hoher Festigkeit, sowie zunehmender Verfestigung beim Verformen und eine zweite Kunststoffschicht der Dicke von 0,1 bis 0,8 mm mit hoher Dehnung und hohem Lastaufnahmevermögen bei der Umformung enthält, und zwischen den Kunststoffschichten sich eine Metallschicht einer Dicke von 0,006 bis 0,1 mm aus Aluminium mit einem Aluminiumgehalt von 98 % oder mehr oder aus einer Aluminiumlegierung befindet, mit der Massgabe, dass Aluminiumfolien aus superplastischen Aluminiumlegierungen mit einer Reissdehnung von grösser als 30 % bei einer Dehngeschwindigkeit von grösser als 10'%/sec ausenommen sind, wobei die erste Kunststoffschicht als Dehnvermittler für die Metallschicht dient und quasiisotrop ist, und die zweite Kunststoffschicht 10 bis 70 Vol.-%, bezogen auf die zweite Kunststoffschicht, Füllstoffe enthält.

3. Sterilisierfähiger Verpackungsbehälter nach Anspruch 1 oder 2, dadurch gekennzeichnet, dass die Metallschichtdicke weniger als 10 % der Dicke des Verbundmaterials beträgt.

4. Sterilisierfähiger Verpackungsbehälter nach Anspruch 1 oder 2, dadurch gekennzeichnet, dass die zweite Kunststoffschicht sich auf der Behälterinnenseite befindet.

5. Sterilisierfähiger Verpackungsbehälter nach Anspruch 1 oder 2, dadurch gekennzeichnet, dass die erste Kunststoffschicht eine Dicke von 0,01 bis 0,04 mm aufweist.

6. Sterilisierfähiger Verpackungsbehälter nach Anspruch 1 oder 2, dadurch gekennzeichnet, dass die zweite Kunststoffschicht eine Dicke von 0,1 bis 0,6 mm aufweist.

7. Sterilisierfähiger Verpackungsbehälter nach Anspruch 2, dadurch gekennzeichnet, dass die zweite Kunststoffschicht 20 bis 50 Vol.-%, bezogen auf die zweite Kunststoffschicht, Füllstoffe enthält.

8. Sterilisierfähiger Verpackungsbehälter nach Anspruch 1 dadurch gekennzeichnet, dass die Metallschicht eine Dicke von 0,006 bis 0,04 mm aufweist.

9. Sterilisierfähiger Verpackungsbehälter nach Anspruch 2, dadurch gekennzeichnet, dass die Metallschicht eine Dicke von 0,02 bis 0,1 mm aufweist.

10. Sterilisierfähiger Verpackungsbehälter nach Anspruch 1 oder 2, dadurch gekennzeichnet, dass über der zweiten Kunststoffschicht eine physiologisch unbedenkliche dritte Kunststoffschicht, die siegelbar ist, angebracht ist.

11. Verfahren zur Herstellung eines sterilisierfähigen Verpackungsbehälters nach der Anspruch 1 oder 2, dadurch gekennzeichnet, dass der Behälter durch eine Kombination von Streck- und Tiefziehen bei erhöhter Temperatur unterhalb der Thermoformtemperaturen der eingesetzten Kunststoffe gefertigt wird.

12. Verfahren zur Herstellung eines sterilisierfähigen Verpackungsbehälters nach Anspruch 1 oder 2, dadurch gekennzeichnet, dass der Behälter durch eine Kombination von Tiefziehen und thermischer Stabilisierung unterhalb der Thermoformtemperatur der eingesetzten zweiten Kunststoffschicht gefertigt wird.

13. Verfahren zur Herstellung eines sterilisierfähigen Verpackungsbehälters nach Anspruch 1 oder 2, dadurch gekennzeichnet, dass zunächst ein Behälter gefertigt wird, der auf der Aussenseite eine Kunststoffschicht, die keine ausreichende Steifigkeitseigenschaften besitzt, aufweist und dieser durch Umspritzen mit einer Thermoplastschicht versehen wird.

14. Verfahren zur Herstellung eines sterilisierfähigen Verpackungsbehälters nach Anspruch 13, dadurch gekennzeichnet, dass die Thermoplastschicht eine Dicke von 0,3 bis 0,6 mm aufweist.

## Claims

1. Sterilisable packaging container made from a plastic-metalplastic laminate, the proportional thickness of the metal being less than 20 % of the total thickness of the laminate, produced by forming, characterised in that the laminate consists of a first plastic layer of biaxially oriented materials with high elongation and simultaneously high internal stress and increasing strengthening during deformation and a second plastic layer having a thickness of 0.1 to 0.8 mm with high elongation and a high load-bearing capacity during forming, between which there is situated a metal layer having a thickness of 0.006 to 1 mm of aluminium with an aluminium content of 98 % or more or of an aluminium alloy, with the proviso that aluminium films of superplastic aluminium alloys with an elongation at break of more than 30 % at a creep rate of more than 10 %/sec are excepted, the first plastic layer serving as an extension promoter for the metal layer and being quasi-isotropic, and the second plastic layer being stiffened by increasing elongation during forming.

2. Sterilisable packaging container according to claim 1, characterised in that the laminate contains a first plastic layer of biaxially oriented materials having a thickness of 0.008 to 0.05 mm with high extensibility and simultaneously high strength, and increasing strengthening during deformation and a second plastic layer having a thickness of 0.1 to 0.8 mm with high elongation and a high load-bearing capacity during forming, and a metal layer having a thickness of 0.006 to 0.1 mm of aluminium with an aluminium content of 98 % or more or of an aluminium alloy is situated between the plastic layers, with the proviso that aluminium films of superplastic aluminium alloys with an elongation at break of more than 30 % at a creep rate of more than 10 %/sec are excepted, the first plastic layer serving as an extension promoter for the metal layer and being quasi-isotropic, and the second plastic layer containing 10 to 70 % by volume of fillers in relation to the second plastic layer.

3. Sterilisable packaging container according to claim 1 or claim 2, characterised in that the metal layer thickness is less than 10 % of the thickness of the laminate.

4. Sterilisable packaging container according to claim 1 or claim 2, characterised in that the second plastic layer is situated on the inner face of the container.

5. Sterilisable packaging container according to claim 1 or claim 2, characterised in that the first plastic layer has a thickness of 0.01 to 0.04 mm.

6. Sterilisable packaging container according to claim 1 or claim 2, characterised in that the second plastic layer has a thickness of 0.1 to 0.6 mm.

7. Sterilisable packaging container according to claim 2, characterised in that the second plastic layer contains 20 to 50 % by volume of fillers in relation to the second plastic layer.

8. Sterilisable packaging container according to claim 1, characterised in that the metal layer has a thickness of 0.006 to 0.04 mm.

9. Sterilisable packaging container according to claim 2, characterised in that the metal layer has a thickness of 0.02 to 0.1 mm.

10. Sterilisable packaging container according to claim 1 or claim 2, characterised in that a third permitted plastic layer, which is heat-sealable, is applied to the second plastic layer.

11. Method for the production of a sterilisable packaging container according to claim 1 or claim 2, characterised in that the container is produced by a combination of stretch-forming and deep-drawing at an elevated temperature below the thermoforming temperatures of the plastics used.

12. Method for the production of a sterilisable packaging container according to claim 1 or claim 2, characterised in that the container is produced by a combination of deep-drawing and thermal stabilisation below the thermoforming temperature of the second plastic layer used.

13. Method for the production of a sterilisable packaging container according to claim 1 or claim 2, characterised in that first a container is produced which is provided on its outer face with a plastic layer which does not have sufficient rigidity properties and these are then provided by injection moulding a thermoplastic layer around it.

14. Method for the production of a sterilisable packaging container according to claim 13, characterised in that the thermoplastic layer has a thickness of 0.3 to 0.6 mm.

## Revendications

1. Récipient de conditionnement stérilisable en matériau composite plastique-métal-plastique, l'épaisseur du métal étant inférieure à 20 % de l'épaisseur totale du matériau composite, produit par déformation,
caractérisé en ce que
le matériau composite se compose d'une première couche plastique en matériaux étirés biaxialement faisant preuve d'un allongement élevé et simultanément d'une contrainte propre élevée ainsi que d'une consolidation croissante au cours de la déformation et d'une seconde couche plastique de 0,1 à 0,8 mm d'épaisseur faisant preuve d'un allongement élevé et d'une capacité de charge élevée au cours de la déformation, entre lesquelles se trouve une couche métallique de 0,006 à 0,01 mm d'épaisseur en aluminium ayant une teneur en aluminium supérieure ou égale à 98 % ou en alliage d'aluminium, à la condition que soient exclues des feuilles d'aluminium en alliages d'aluminium superplastiques faisant preuve d'un allongement à la rupture supérieur à 30 % pour une vitesse d'allongement supérieure à 10'%/s, la première couche plastique faisant office de médiateur d'allongement pour la couche métallique et étant quasi-isotrope et la seconde couche plastique étant raidie au cours de la déformation par allongement croissant.

2. Récipient de conditionnement stérilisable selon la revendication 1,
caractérisé en ce que
le matériau composite contient une première couche plastique en matériaux étirés biaxialement de 0,008 à 0,05 mm d'épaisseur faisant preuve d'une capacité d'allongement élevée et simultanément d'une résistance mécanique élevée, ainsi que d'une consolidation croissante au cours de la déformation et une seconde couche plastique de 0,1 à 0,8 mm d'épaisseur faisant preuve d'un allongement élevé et d'une capacité de charge élevée au cours de la déformation, et que se trouve entre les couches plastiques une couche métallique de 0,006 à 0,1 mm d'épaisseur en aluminium ayant une teneur en aluminium supérieure ou égale à 98 % ou en alliage d'aluminium, à la condition que soient exclues les feuilles d'aluminium en alliages d'aluminium superplastiques ayant un allongement à la rupture supérieur à 30 % pour une vitesse d'allongement supérieure à 10' %/s, la première couche plastique faisant office de médiateur d'allongement pour la couche métallique et étant quasi-isotrope et la seconde couche plastique contenant 10 à 70 % en volume de matières de charge, par rapport à la seconde couche plastique.

3. Récipient de conditionnement stérilisable selon la revendication 1 ou 2, caractérisé en ce que l'épaisseur de la couche métallique est inférieure à 10 % de l'épaisseur du matériau composite.

4. Récipient de conditionnement stérilisable selon la revendication 1 ou 2, caractérisé en ce que la seconde couche plastique se trouve sur la face interne du récipient.

5. Récipient de conditionnement stérilisable selon la revendication 1 ou 2, caractérisé en ce que la première couche plastique a une épaisseur comprise entre 0,01 et 0,04 mm

6. Récipient de conditionnement stérilisable selon la revendication 1 ou 2, caractérisé en ce que la seconde couche plastique a une épaisseur comprise entre 0,1 et 0,6 mm

7. Récipient de conditionnement stérilisable selon la revendication 2, caractérisé en ce que la seconde couche plastique contient 20 à 50 % en volume de matières de charge, par rapport à la seconde couche plastique.

8. Récipient de conditionnement stérilisable selon la revendication 2, caractérisé en ce que la couche métallique a une épaisseur comprise entre 0,006 et 0,04 mm.

9. Récipient de conditionnement stérilisable selon la revendication 2, caractérisé en ce que la couche métallique a une épaisseur comprise entre 0,02 et 0,1 mm.

10. Récipient de conditionnement stérilisable selon la revendication 1 ou 2, caractérisé en ce qu'une troisième couche plastique physiologiquement inoffensive, scellable, est déposée sur la seconde couche plastique.

11. Procédé de production d'un récipient de conditionnement stérilisable selon la revendication 1 ou 2, caractérisé en ce que le récipient est produit par une combinaison d'étirage-emboutissage et d'emboutissage profond à haute température, à des températures inférieures à la température de thermoformage des matières plastiques utilisées.

12. Procédé de production d'un récipient de conditionnement stérilisable selon la revendication 1 ou 2, caractérisé en ce que le récipient est produit par une combinaison d'étirage profond et de stabilisation thermique à des températures inférieures à la température de thermoformage de la seconde couche plastique utilisée.

13. Procédé de production d'un récipient de conditionnement stérilisable selon la revendication 1 ou 2, caractérisé en ce qu'on produit d'abord un récipient présentant sur sa face externe une couche plastique ne possédant pas de propriétés suffisantes de rigidité et qu'on le revêt par extrusion d'une couche thermoplastique.

14. Procédé de production d'un récipient de conditionnement stérilisable selon la revendication 13, caractérisé en ce que la couche thermoplastique présente une épaisseur comprise entre 0,3 et 0,6 mm.
